# EUROPÄISCHE PATENTSCHRIFT

(11) **EP 0 887 177 B1**
(45) Veröffentlichungstag und Bekanntmachung des Hinweises auf die Patenterteilung: **26.06.2002**
(21) Anmeldenummer: 98110534.9
(22) Anmeldetag: 09.06.1998
(51) Int. Cl.: B29C 57/12

(54) **Lippenrollvorrichtung**
Apparatus for rolling tube ends
Dispositif pour rouler l'extremité d'un tube

(30) Priorität: 27.06.1997 DE 19727495
(43) Veröffentlichungstag der Anmeldung: 30.12.1998
(73) Patentinhaber: BELLAFORM EXTRUSIONSTECHNIK GMBH, 55218 Ingelheim (DE)
(72) Erfinder: Merz, Ulrich, 55239 Gau-Odernheim (DE)
(74) Vertreter: Fuchs Mehler Weiss & Fritzsche

(56) Entgegenhaltungen:
- GB-A- 1 064 611
- US-A- 3 676 543
- US-A- 4 391 768

## Beschreibung

Die Erfindung betrifft eine Lippenrollvorrichtung mit parallel zueinander angeordneten Rollschnecken, die mit Antriebsrädern versehen sind.

Lippenrollvorrichtungen werden eingesetzt, um an ausgestanzten, tiefgezogenen Kunststoffbechern einen Rollrand anzubringen, weil der Öffnungsrand nach dem Herstellvorgang derart scharfkantig ist, daß die Becher ohne diesen zusätzlichen Bearbeitungsschritt nicht brauchbar sind. Die Becher werden im Stapel der Lippenrollvorrichtung zugeführt, in der sie von beheizten Rollschnecken erfaßt werden, die an ihren Oberflächen gewindeartig verlaufende Nuten aufweisen, in der der Rollrand während des Durchlaufs der Becher geformt wird. Durch die Rotation der Rollschnecken werden die Becher gleichzeitig durch die Lippenrollvorrichtung transportiert. Der Antrieb der Rollschnecken erfolgt an einer der Stirnseiten der Rollschnecken über entsprechend angeordnete Antriebsräder.

Damit jeder Becher mit seinem Rand zu Beginn der Formstrecke gleichzeitig von allen Rollschnecken erfaßt wird und während des Transport längs der Rollschnecken nicht verzogen wird, müssen die gewindeartigen Nuten eine feste Phasenbeziehung zueinander aufweisen. Diese einmal eingestellte Phasenbeziehung darf sich nicht verändern, insbesondere dann nicht, wenn der Abstand der Rollschnecken zueinander verändert wird. um Becher mit unterschiedlichem Durchmesser bearbeiten zu können. Das Umrüsten auf einen anderen Becherdurchmesser bedingt auch einen Umbau im Bereich der Antriebseinrichtung, wobei der synchrone Antrieb aller Rollschnecken auch nach dem Umrüstvorgang gewährleistet sein muß. Diese Umrüstmaßnahmen sind in der Regel aufwendig und erfordern nach Beendigung eine Neujustierung der Rollschnecken zur Einstellung der Phasenbeziehung.

Es ist daher Aufgabe der Erfindung, eine derartige Lippenrollvorrichtung dahingehend zu verbessern, daß die Umrüstung auf andere Becherdurchmesser auf einfache Weise durchgeführt werden kann, ohne daß im Bereich der Antriebseinrichtung Veränderungen vorgenommen werden müssen und ohne daß sich die Phasenbeziehung der Rollschnecken zueinander ändert.

Diese Aufgabe wird mit einer Lippenrollvorrichtung gemäß den Merkmalen des Patentanspruches 1 gelöst. Vorteilhafte Ausgestaltungen werden in den Unteransprüchen beschrieben.

Es hat sich gezeigt, daß die Becher weitaus besser während des Formvorganges geführt werden, wenn insgesamt vier Rollschnecken anstatt der üblicherweise drei Rollschnecken verwendet werden. Vier Rollschnecken können darüber hinaus besser zu einer symmetrischen Anordnung zusammengefaßt werden, die wiederum Vorteile hinsichtlich der Anpassung an unterschiedliche Becherdurchmesser mit sich bringt. Die vier Rollschnecken werden zu zwei Rollschneckenpaaren zusammengefaßt, die gegenüberliegend angeordnet sind, wobei die Rollschnecken jedes Paares im festen Abstand zueinander angeordnet sind und der gegenseitige Abstand der Rollschneckenpaare veränderbar ist. Zur Anpassung an unterschiedliche Becherdurchmesser ist es nicht erforderlich, alle Rollschnecken in radialer Richtung von einem gemeinsamen Mittelpunkt zu bewegen. Es reicht vollkommen aus, wenn die Rollschneckenpaare gegeneinander bewegt werden.

Die Antriebsräder sind von einem gemeinsamen Antriebsriemen antreibbar, der von einem Motor angetrieben werden kann. Da der Antriebsriemen eine vorgegebene Länge aufweist, muß bei einer Abstandsänderung der Rollschneckenpaare ein Längenausgleich hergestellt werden. Dies geschieht erfindungsgemäß durch das Vorsehen mindestens einer Umlenkrolle, die längs der Symmetrielinie zwischen den Antriebsräderpaaren beweglich angeordnet ist.

Vorzugsweise sind zwei Umlenkrollen vorgesehen, die gegenüberliegend auf der Symmetrielinie angeordnet sind. Wenn die Rollschneckenpaare und somit auch die Antriebsräderpaare aufeinander zubewegt werden, um einen kleineren Becherdurchmesser einzustellen, entfernen sich die beiden Umlenkrollen vom gemeinsamen Mittelpunkt und wandern nach außen. Dadurch bleibt der Antriebsriemen gespannt. Umgekehrt wandern die beiden Umlenkrollen aufeinander zu, wenn der Abstand zwischen den Rollschneckenpaaren vergrößert wird.

Damit bei diesem Vorgang sich die Rollschnecken nicht verdrehen und exakt in ihrer Position verharren, ist es erforderlich, daß sämtliche Antriebsräder, einschließlich der Umlenkrollen, denselben Durchmesser aufweisen. Dies führt bei einer Bewegung der Rollschneckenpaare dazu, daß sich nur die Kontaktfläche des Antriebsriemens auf den Antriebsrädern ändert, ohne daß sich die Antriebsräder drehen. Eine Abnahme der Kontaktfläche auf den Antriebsrädern ist gleichzeitig mit einer Vergrößerung der Kontaktfläche des Antriebsriemens auf den Umlenkrollen verbunden. Dies bedeutet, daß die Summe der Umschlingungen in jeder Stellung der Rollschneckenpaare konstant bleibt. Konstant bleibt auch der Abstand der Umlenkrollen zu den benachbarten Antriebsrädern.

Die Umrüstung auf einen anderen Becherdurchmesser ist somit auf einfache Weise möglich. ohne daß sich die Phasenbeziehung der Rollschnecken zueinander ändert und ohne daß Umbaumaßnahmen an der Antriebseinrichtung vorgenommen werden müssen.

Vorzugsweise sind die zwei Umlenkrollen auf jeweils einem die Rollschneckenpaare verbindenden Ausgleichsgelenk angeordnet. Dieses Ausgleichsgelenk kann gemäß einer bevorzugten Ausführungsform aus einem Winkelgelenk bestehen, das zwei gleich lange Gelenkarme aufweist, die im gemeinsamen Gelenkpunkt die Umlenkrolle tragen und an ihren freien Enden in der Drehachse der Rollschnecken gegenüberliegender Rollschneckenpaare angelenkt sind. Dadurch wird gewährleistet, daß der Abstand zwischen den Umlenkrollen und den benachbarten Antriebsrädern konstant bleibt. Bei einer Abstandsänderung der Rollschneckenpaare ändert sich lediglich der Winkel zwischen den Gelenkarmen, wobei sich der gemeinsame Gelenkpunkt und somit die dort angebrachte Umlenkrolle auf der zuvor beschriebenen Symmetrielinie bewegt.

Vorzugsweise sind die Antriebsräder Zahnräder und der Antriebsriemen kann ein Zahnriemen, eine Rollenkette oder eine Zahnkette sein.

Zusätzlich kann zwischen den Antriebsrädern eines Rollschneckenpaares ein zusätzliches Spannrad angeordnet sein.

Um die Flexibilität der Lippenrollvorrichtung noch weiter zu verbessern und die Umrüstung zu vereinfachen, ist die Rollschnecke modular aufgebaut. Dies bedeutet, daß die Rollschnecke einen Rollschneckenkern aufweist, auf dem ein auswechselbarer Rollschneckenmantel angebracht ist. Der Rollschneckenkern kann in der Vorrichtung verbleiben, wenn der Mantel ausgetauscht wird. Dadurch bleibt auch die Rotationslage des Kerns und somit die der gesamten Rollschnecke bei einem Austausch des Mantels erhalten. Durch entsprechende Fixiernasen oder ähnliche geeignete Maßnahmen wird bei einem Einsetzen eines neuen oder anders ausgestalteten Rollschneckenmantels die Phasenbeziehung zwischen den Rollschnecken beibehalten. Eine zusätzliche Justierung nach dem Umbau ist nicht erforderlich.

Da die Lippenrollvorrichtung Teil einer Gesamtvorrichtung ist, die u.a. auch Fördereinrichtungen für die Becher vorsieht, ist es zweckmäßig, wenn jedes Rollschneckenpaar unabhängig voneinander beweglich ist. Es kann dadurch eine bessere Anpassung an die übrigen Komponenten einer solchen Gesamtvorrichtung vorgenommen werden.

Beispielhafte Ausführungsformen werden nachfolgend anhand der Zeichnungen näher erläutert.

Es zeigen:
- Figur 1: einen Vertikalschnitt der Lippenrollvorrichtung in Längsrichtung,
- Figur 2: eine Draufsicht auf die Stirnfläche der in Figur 1 gezeigten Lippenrollvorrichtung mit den Antriebsmitteln,
- Figur 3a,b: eine vereinfachte Darstellung der Figur 2 zur Veranschaulichung der Position der Rollschnecken bei unterschiedlichen Becherdurchmessern.

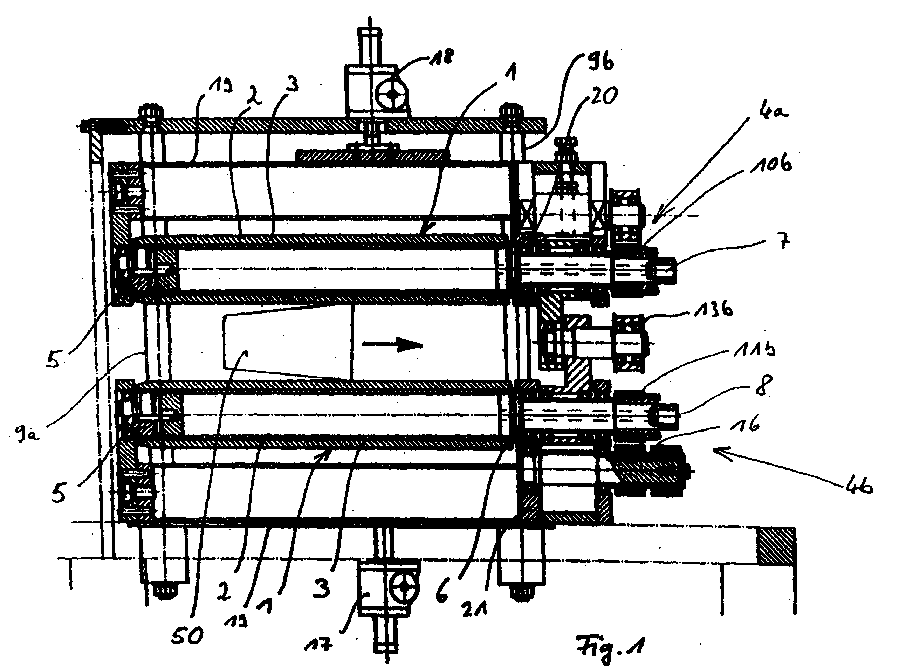

In der Figur 1 ist ein Vertikalschnitt einer Lippenrollvorrichtung dargestellt. Von den insgesamt vier Rollschnecken 1 sind lediglich zwei zu sehen, wobei die obere Rollschnecke 1 zum oberen Rollschneckenpaar 4a und die untere Rollschnecke 1 zum unteren Rollschneckenpaar 4b gehört. Die Rollschnecken 1, die im Schnitt dargestellt sind, weisen einen Rollschneckenkern 2 und einen austauschbaren Rollschneckenmantel 3 auf, der mit gewindeartigen Nuten versehen ist, die in der hier gezeigten Darstellung aber nicht zu sehen sind. Am rechten Ende der Rollschnecken sind die Zahnräder 10a, b, 11a, b auf der Rollschneckenachse angebracht, die zum Antrieb der Rollschnecken 1 dienen.

Die mit dem Rollrand zu versehenden Becher - ein Becher 50 ist beispielhaft eingezeichnet - werden von links in liegender Position zugeführt und durch die Rotation der Rollschnecken 1 nach rechts transportiert, wobei der Rollrand in den Nuten der Rollschnecken 1 geformt wird. Da hierzu eine erhöhte Temperatur erforderlich ist, sind die Rollschneckenkerne hohl und werden von einer erwärmten Flüssigkeit durchspült, die über die Wasseranschlüsse 7,8 zugeführt wird.

Der Rollschneckenkern 2 besitzt am rechten Ende eine Schulter 6, an der der Rollschneckenmantel 3 mit seiner Stirnfläche anliegt. Am gegenüberliegenden Ende ist eine austauschbare Stirnplatte 5 vorgesehen, die zum Austausch des Rollschneckenmantels 3 auf einfache Weise entfernt werden kann.

Die Rollschnecken 1 sind in einer oberen Lagerplatte 20 und einer unteren Lagerplatte 21 drehbar gelagert, die über eine Stangenführung 9a,b miteinander verbunden sind. Das obere Rollschneckenpaar 4a und das untere Rollschneckenpaar 4b sind jeweils mit einer eigenen Verstelleinrichtung 17,18 über eine Verbindungsstange 19 verbunden, die eine unabhängige Verstellung der Rollschneckenpaare 4a,b zur Einstellung unterschiedlicher Becherdurchmesser erlauben.

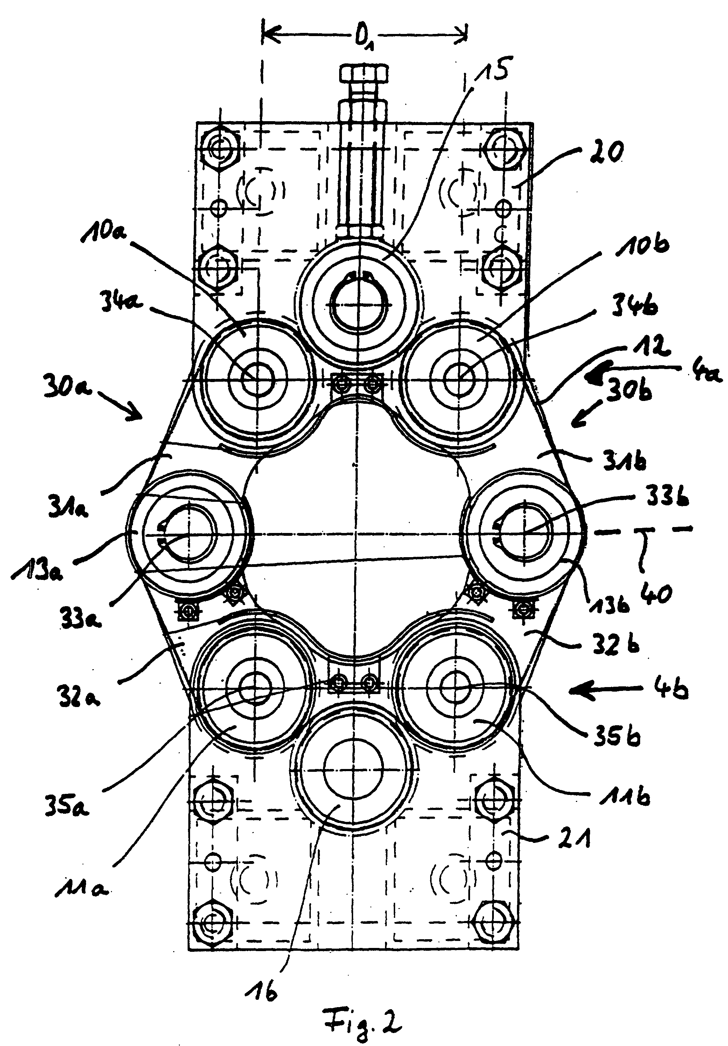

In der Figur 2 ist die Draufsicht auf die rechte Stirnfläche der in Figur 1 gezeigten Lippenrollvorrichtung dargestellt. An der oberen Lagerplatte 20 sind die oberen Rollschnecken 1 drehbar gelagert, wobei in dieser Darstellung nur die dazugehörigen Antriebsräder 10a, 10b zu sehen sind. Durch die Lagerung in einer gemeinsamen Lagerplatte 20 befinden sich die beiden Antriebsräder 10a, 10b, die in der hier gezeigten Ausführungsform Zahnräder sind, in einem festen Abstand D1 zueinander. Eine entsprechende Anordnung bildet das untere Rollschneckenpaar 4b mit den Antriebsrädern 11a und 11b. die in der unteren Lagerplatte 21 gelagert sind.

Zwischen den Antriebsrädern 10a und 11a bzw. 10b und 11b ist jeweils ein Ausgleichsgelenk 30a, 30b angeordnet, das die obere Lagerplatte 20 mit der unteren Lagerplatte 21 verbindet. Jedes Ausgleichsgelenk 30a, 30b weist zwei gleich lange Schenkel 31a, 32a bzw. 31b, 32b auf. Im gemeinsamen Gelenkpunkt 33a, 33b ist jeweils eine Umlenkrolle 13a, 13b angeordnet. Aufgrund der identischen Länge der Gelenkarme 31, 32a und 31b, 32b befinden sich diese Gelekpunkte 33a, 33b bzw. die Umlenkrollen 13a, 13b auf der Symmetrielinie 40, die in der Mitte zwischen den Rollschneckenpaaren 4a,b bzw. deren Antriebsräderpaaren 10a, b bzw. 11a, b liegt. Die freien Enden der Gelenkarme 31a, 32a sind in den Gelenkpunkten 34a, 35a bzw. 34b und 35b mit den dazugehörigen Achsen der Rollschnecken 1 verbunden. Die vier Antriebsräder 10a, b, 11a, b liegen zusammen mit den Umlenkrollen 13a, 13b in der hier gezeigten Position in etwa auf einem Kreis. Die Antriebsräder 10a, b, 11a, b und die Umlenkrollen 13a, b werden von einem gemeinsamen Antriebsriemen 12 umschlungen, der mittels einer an der oberen Lagerplatte angeordneten Spannrolle 15 gespannt und mittels einem an der unteren Lagerplatte 21 angeordnetem Antriebsrad 16 angetrieben wird. Im Innenraum der kreisförmigen Anordnung der Antriebsräder und Umlenkrollen befinden sich die zu formenden Becher, die aber in der Figur 2 nicht dargestellt sind.

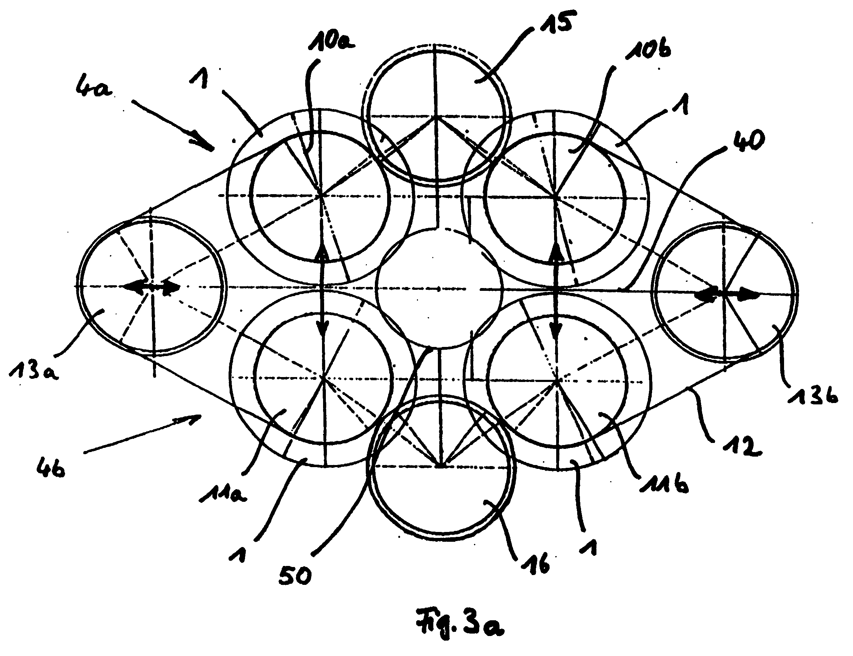

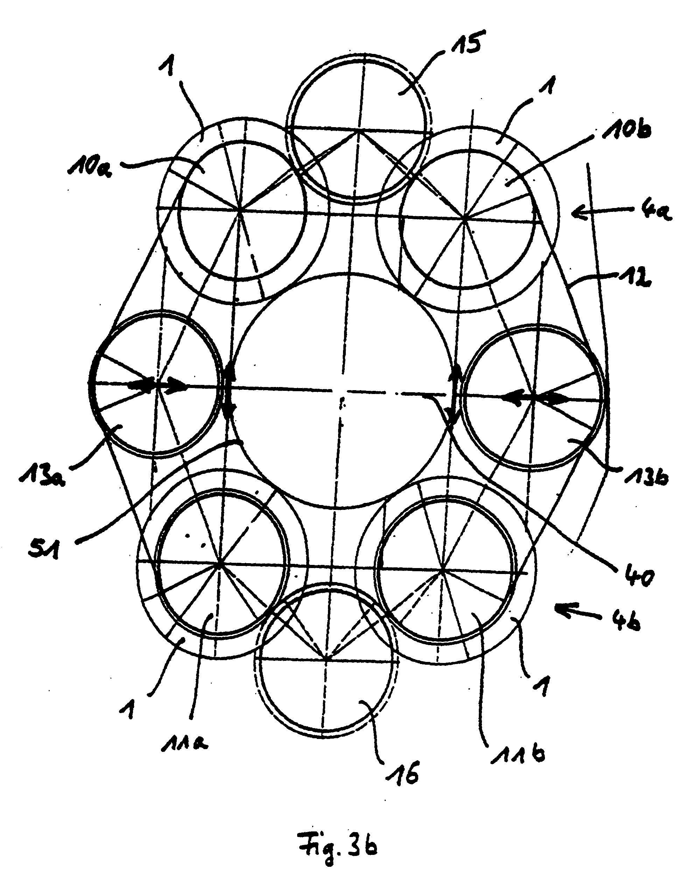

Die Anpassung der Vorrichtung an unterschiedliche Becherdurchmesser wird anhand der vereinfachten Darstellung der Figuren 3a und b erläutert.

In der Figur 3a ist ein Becher 50 mit einem kleinen Durchmesser dargestellt. Die Rollschnecken 1 mit den dazugehörigen Antriebsrädern 10a, b bzw. 11a, b sind aufeinander zubewegt worden, was durch die beiden senkrechten Pfeile angedeutet wird. Gleichzeitig haben sich die beiden Umlenkrollen 13a, 13b nach außen bewegt, so daß der gemeinsame Antriebsriemen 12 im gespannten Zustand verbleibt. Hierbei hat sich die Umschlingung der Umlenkrollen 13a, 13b vergrößert, was mit einer Abnahme der Umschlingung an den Antriebsrädern 10a, b bzw. 11a, b einhergeht.

Wenn von dieser Position auf einen größeren Becherdurchmesser umgestellt werden soll, wie dies in der Figur 3b dargestellt ist, werden die Rollschneckenpaare 4a,b in Pfeilrichtung auseinanderbewegt, bis die in Figur 3b gezeigte Konfiguration eingenommen wird. Bei diesem Auseinanderbewegen der Rollschneckenpaare bewegen sich gleichzeitig die Umlenkrollen 13a, 13b längs der Symmetrielinie 40 aufeinander zu. Während dieser Bewegung findet nur eine Veränderung der Umschlingung der Antriebsräder und der Umlenkrollen statt, nicht jedoch eine Rotation der Rollschnecken 1, die bei dieser Bewegung ihre festen Phasenbeziehung beibehalten. Wie in den Figuren 2, 3a und 3b zu sehen ist, besitzen sämtliche Umlenkrollen 13a, b und die Antriebsräder 10a, b bzw. 11a, b denselben Durchmesser.

### Bezugszeichen:

- 1: Rollschnecke
- 2: Rollschneckenkern
- 3: Rollschneckenmantel
- 4a,b: Rollschneckenpaar
- 5: Stirnplatte
- 6: Schulter
- 7: Wasseranschluß
- 8: Wasseranschluß
- 9a,b: Stangenführung
- 10a, b: Zahnrad
- 11a, b: Zahnrad
- 12: Zahnriemen
- 13a, b: Umlenkrolle
- 15: Spannrad
- 16: Antriebsrad
- 17: Verstelleinrichtung
- 18: Verstelleinrichtung
- 20: obere Lagerplatte
- 21: untere Lagerplatte
- 30a, b: Ausgleichsgelenk
- 31a, b: Gelenkarm
- 32a, b: Gelenkarm
- 33a, b: gemeinsamer Gelenkpunkt
- 34a, b: Anlenkpunkt
- 35a, b: Anlenkpunkt
- 40: Symmetrielinie
- 50: Becher
- 51: Becher

## Patentansprüche

1. Lippenrollvorrichtung mit parallel zueinander angeordneten Rollschnecken, die mit Antriebsrädern versehen sind, **dadurch gekennzeichnet,**
**daß** zwei Rollschneckenpaare (4a,b) gegenüberliegend angeordnet sind, wobei die Rollschnecken (1) jedes Paares im festen Abstand zueinander angeordnet sind und der gegenseitige Abstand der Rollschneckenpaare (4a,b) veränderbar ist,
**daß** die Antriebsräder (10, b, 11a, b) von einem gemeinsamen Antriebsriemen (12) antreibbar sind, der über mindestens eine Umlenkrolle (13a, b) läuft, die längs der Symmetrielinie (40) zwischen den Antriebsräderpaaren (10a, b, 11a, b) beweglich angeordnet ist und
**daß** die Antriebsräder (10a, b, 11a, b) und die Umlenkrolle (13a, b) denselben Durchmesser aufweisen.

2. Vorrichtung nach Anspruch 1, **dadurch gekennzeichnet, daß** zwei Umlenkrollen (13a, b) vorgesehen sind, die jeweils auf einem die Rollschneckenpaare (4a,b) verbindenden Ausgleichsgelenk (30a, b) angeordnet sind.

3. Vorrichtung nach Anspruch 2, **dadurch gekennzeichnet, daß** das Ausgleichsgelenk (30a, b) zwei gleich lange Gelenkarme (31a, 32a, 31b, 32b) aufweist, die im gemeinsamen Gelenkpunkt (33a, b) die Umlenkrolle (13a, b) tragen und an ihrem freien Ende in der Drehachse (34a, b, 35a, b) der Rollschnecken (1) gegenüberliegender Rollschneckenpaare (4a,b) angelenkt sind.

4. Vorrichtung nach einem der Ansprüche 1 bis 3, **dadurch gekennzeichnet, daß** die Antriebsräder (10a, b, 11a, b) Zahnräder sind und daß der Antriebsriemen (12) ein Zahnriemen, eine Rollenkette oder eine Zahnkette ist.

5. Vorrichtung nach einem der Ansprüche 1 bis 4, **dadurch gekennzeichnet, daß** zwischen den Antriebsrädern (10a, b, 11a, b) eines Rollschneckenpaares (4a,b) ein Spannrad (15) angeordnet ist.

6. Vorrichtung nach einem der Ansprüche 1 bis 5, **dadurch gekennzeichnet, daß** die Rollschnecke (1) einen Rollschneckenkern (2) und einen darauf angeordneten auswechselbaren Rollschneckenmantel (3) aufweist.

7. Vorrichtung nach einem der Ansprüche 1 bis 6, **dadurch gekennzeichnet, daß** die Rollschneckenpaare (4a,b) unabhängig voneinander beweglich sind.

## Claims

1. Lip rolling apparatus with rolling worms which are arranged parallel to each other and provided with driving wheels, **characterised in that**
two rolling worm pairs (41,b) are arranged opposite each other, whilst the rolling worms (1) of each pair are arranged at a fixed distance from each other and the mutual spacing of the rolling worm pairs (4a,b) is alterable,
the driving wheels (10, b, 11a, b) are drivable by a common driving belt (12), which runs over at least one deflection roller (13a, b) which is arranged movably along the line (40) of symmetry between the driving wheel pairs (10a, b, 11a, b) and
the driving wheels (10a, b, 11a, b) and the deflection rollers (13a, b) have the same diameter.

2. Apparatus according to claim 1, **characterised in that** two deflection rollers (13a, b) are provided, each of them being arranged on a compensating joint (30a, b) connecting the rolling worm pairs (4a, b).

3. Apparatus according to claim 2, **characterised in that** the compensating joint (30a, b) has two joint arms of equal length (31a, 32a, 31b, 32b) which in the common articulation point (33a, b) carry the deflection roller (31a, b) and at their free ends are linked to the rotational axle (34a, b, 35a, b) of the rolling worms (1) of opposing rolling worm pairs (4a,b).

4. Apparatus according to one of claims 1 to 3, **characterised in that** the driving wheels (10a, b, 11a, b) are toothed wheels and that the driving belt (12) is a toothed belt, a roller chain or a toothed chain.

5. Apparatus according to one of claims 1 to 4, **characterised in that** a tension wheel (15) is arranged between the driving wheels (10a, b, 11a, b) of a rolling worm pair (4a, b).

6. Apparatus according to one of claims 1 to 5, **characterised in that** the rolling worm (1) has a rolling worm core (2) and, provided thereon, an exchangeable rolling worm casing (3).

7. Apparatus according to one of claims 1 to 6, **characterised in that** the rolling worm pairs (4a,b) are movable independently of each other.

## Revendications

1. Dispositif de roulage de lèvres comportant des vis de roulage disposées parallèlement les unes par rapport aux autres, qui sont munies de roues d'entraînement, **caractérisé en ce que**
deux couples (4a, b) de vis de roulage sont disposés l'un en face de l'autre, les vis de roulage (1) de chaque couple étant disposées à un écartement fixe l'une de l'autre, et l'écartement mutuel des couples (4a, b) de vis de roulage étant variable,
les roues d'entraînement (10, b, 11a, b) peuvent être entraînées par une courroie d'entraînement commune (12) qui passe sur au moins un galet de renvoi (13a, b), lequel est disposé de façon à pouvoir être déplacé le long de l'axe de symétrie (40) entre les couples de roues d'entraînement (10a, b, 11a, b), et
les roues d'entraînement (10a, b, 11a, b) et le galet de renvoi (13a, b) ont le même diamètre.

2. Dispositif selon la revendication 1, **caractérisé en ce qu'**il est prévu deux galets de renvoi (13a, b), chacun d'entre eux étant disposé sur une articulation de compensation (30a, b) reliant les couples (4a, b) de vis de roulage.

3. Dispositif selon la revendication 2, **caractérisé en ce que** l'articulation de compensation (30a, b) comporte deux bras articulés (31a, 32a, 31b, 32b) de même longueur, qui portent le galet de renvoi (13a, b) dans le même point d'articulation (33a, b), et qui sont articulés par leurs extrémités libres dans l'axe de rotation (34a, b, 35a, b) des vis de roulage (1) de couples (4a, b) opposés de vis de roulage.

4. Dispositif selon l'une quelconque des revendications 1 à 3, **caractérisé en ce que** les roues d'entraînement (10a, b, 11a, b) sont des roues dentées, et **en ce que** la courroie d'entraînement (12) est une courroie crantée, une chaîne à galets ou une chaîne crantée.

5. Dispositif selon l'une quelconque des revendications 1 à 4, **caractérisé en ce qu'**une roue de tension (15) est disposée entre les roues d'entraînement (10a, b, 11a, b) d'un couple (4a, b) de vis de roulage.

6. Dispositif selon l'une quelconque des revendications 1 à 5, **caractérisé en ce que** la vis de roulage (1) comporte un noyau (2) de vis de roulage, et une enveloppe (3) de vis de roulage interchangeable disposée sur ce dernier.

7. Dispositif selon l'une quelconque des revendications 1 à 6, **caractérisé en ce que** les couples (4a, b) de vis de roulage peuvent être déplacés indépendamment les uns des autres.
